# EUROPÄISCHE PATENTANMELDUNG

(11) **EP 1 255 066 A2**
(43) Veröffentlichungstag der Anmeldung: **06.11.2002**
(21) Anmeldenummer: 02009094.0
(22) Anmeldetag: 24.04.2002
(51) Int. Cl.: F16K 31/06, F16K 1/12

(54) **Koaxialventil**

(30) Priorität: 03.05.2001 DE 10121616
(71) Anmelder: müller co-ax AG, 74670 Forchtenberg (DE)
(72) Erfinder: Fauser, Hans-Peter, 74653 Ingelfingen (DE); Köhler, Udo, 74670 Forchtenberg (DE); Kern, Dieter, 74670 Forchtenberg (DE)
(74) Vertreter: Patentanwälte Ruff, Wilhelm, Beier, Dauster & Partner

(57) **Zusammenfassung**

Bei einem Koaxialventil wird vorgeschlagen, zwischen dem Anker (10), der mit dem axial bewegbaren Ventilschließkörper (4) verbunden ist, und der Gehäuseinnenseite einen Spalt mit einem genau definierten Querschnitt vorzusehen. Der Querschnitt wird so bemessen, dass das Ventil beim Schließen, das unter der Wirkung einer Feder (13) oder eines magnetischen Antriebs geschehen kann, sich nicht zu schnell bewegt, um ein zu hartes Auftreffen auf dem Ventilsitz zu verhindern.

## Beschreibung

Die Erfindung geht aus von einem Koaxialventil. Koaxialventile sind seit langem bekannt. Sie besitzen in einem Ventilgehäuse einen Ventilschließkörper, der als Rohr ausgebildet ist, durch das die zu steuernde Flüssigkeit im geöffneten Zustand des Ventils strömt. Koaxialventile haben den Vorteil, dass ihre Charakteristik unabhängig von dem Druck des zu steuernden Fluids ist. Sie werden daher auch als druckentlastete Ventile bezeichnet.

Der Antrieb von Koaxialventile ist üblicherweise ein magnetischer Antrieb. An der Außenseite des Ventilschließkörpers ist der Anker befestigt, der gegen das Joch eines Elektromagneten angezogen wird, um das Ventil zu öffnen. Zum Schließen des Ventils wird der Strom abgeschaltet. Dann drückt eine Feder den Ventilschließkörper gegen den Ventilsitz.

Es gibt auch Koaxialventile, die umgekehrt ausgebildet sind. Bei ihnen öffnet eine Feder das Ventil, während zum Schließen der magnetische Antrieb betätigt wird.

Der Ventilschließkörper bewegt sich in einem abgedichteten Raum des Ventilgehäuses. Der Anker bewegt sich in einem zylindrischen Raum. Bei seiner Bewegung in Axialrichtung verringert er das Volumen des Raumes vor seiner Stirnseite und vergrößert gleichzeitig das Volumen auf der gegenüberliegenden Seite. Bisher ist es bekannt, diese beiden Räume durch einen Durchgang zu verbinden, der beispielsweise als tiefe Nut in der Außenseite des Ankers ausgebildet ist. Der Querschnitt dieses Durchgangs ist so gewählt, dass durch das Durchströmen von in dem Raum, in dem sich der Anker bewegt, befindlichem Fluid keine Einflüsse auf die Bewegung des Ventils ausgehen.

Bei dem Schließen des Ventils kann es vorkommen, dass der Ventilschließkörper mit großer Wucht gegen den Ventilsitz prallt. Dies kann zu Beschädigungen des Ventilsitzes und damit zu einer Verringerung der Lebensdauer des Ventils führen.

Der Erfindung liegt die Aufgabe zugrunde, eine Möglichkeit zu schaffen, Auswirkungen eines beim Schließen des Ventils auftretenden Schlags zu verringern.

Zur Lösung dieser Aufgabe schlägt die Erfindung ein Koaxialventil mit den im Anspruch 1 genannten Merkmalen vor. Weiterbildungen der Erfindung sind Gegenstand von Unteransprüchen.

Das Koaxialventil enthält in seinem Gehäuse einen Ventilsitz und den Ventilschließkörper. Dieser führt im Bereich seiner beiden Enden durch eine gehäusefeste Dichtung hindurch. Der Raum zwischen dem Gehäuseinneren und den beiden Dichtungen sowie dem Ventilschließkörper ist gegenüber der Außenseite und gegenüber den Strömungswegen für die zu steuernde Flüssigkeit abgedichtet. Dieser Raum kann jedoch aus bestimmten Gründen ein Fluid, auch eine Flüssigkeit, beispielsweise eine Schmierung, enthalten. Wird nun der Anker axial bewegt, so verdrängt er das Fluid aus dem einen Stirnraum in den gegenüberliegenden Stirnraum. Durch entsprechende Auswahl des Querschnitts des Durchgangs kann die Öffnungs- und Schließcharakteristik des Ventils eingestellt werden. Insbesondere kann beim Schließen des Ventils, was durch die Kraft der Feder oder durch den Magnetantrieb bewirkt wird, ein zu hartes Aufschlagen des Ventilschließkörpers auf den Ventilsitz verhindert werden. Dadurch kann die Lebensdauer des Ventils verlängert werden.

Insbesondere kann in Weiterbildung der Erfindung vorgesehen sein, dass der Querschnitt so gewählt wird, dass die Schließbewegung des Ventilsitzes verlangsamt wird. Beim Öffnen des Ventils wirkt der Durchgang zwar auch, jedoch ist die Öffnungsbewegung nicht die kritische Bewegung, da der Ventilschließkörper beim Öffnen nicht gegen einen Ventilsitz oder ein anderes Teil des Gehäuses anschlägt. Darüber hinaus kann die Geschwindigkeit der Öffnungsbewegung auch durch Merkmale des elektromagnetischen Antriebs bestimmt werden.

Es gibt eine Reihe von Möglichkeiten, wo der Durchgang angeordnet werden kann. Beispielsweise kann der Durchgang als Kanal oder auch als mehrere Kanäle zwischen dem Anker und dem Ventilschließkörper ausgebildet sein. Der Anker ist ein von dem Ventilschließkörper getrenntes Bauteil, das nachträglich mit dem Ventilschließkörper verbunden wird. Beispielsweise könnte an der Innenseite des Ankers eine schmale Nut oder auch mehrere schmale Nuten angebracht werden, die dann nach der Verbindung des Ankers mit dem Ventilschließkörper als schmale Kanäle stehen bleiben.

Eine weitere Möglichkeit, den Durchgang anzuordnen, besteht darin, dass der Durchgang durch das Ventilgehäuse führt.

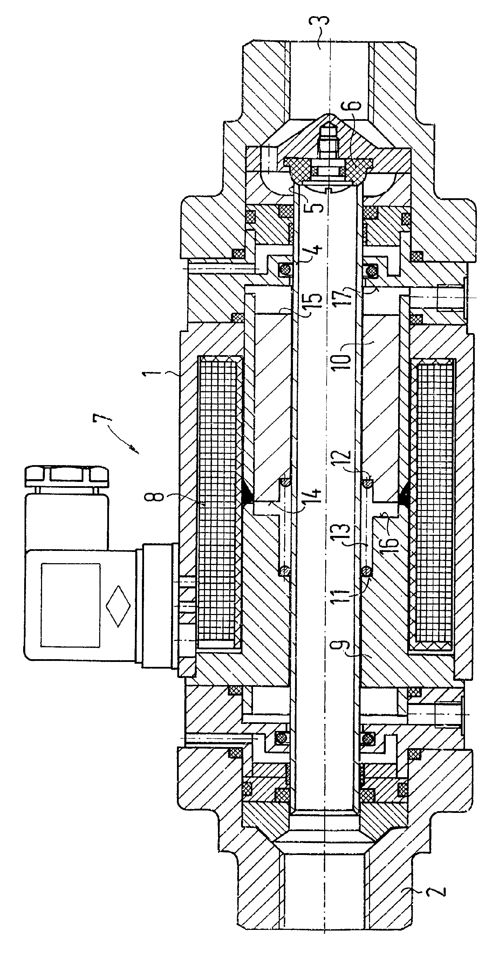

Als besonders günstig hat es sich herausgestellt, wenn der Durchgang mit dem definierten Querschnitt als Ringspalt zwischen der radialen Außenseite des Ankers und dem diesen umgebenden Gehäuse ausgebildet ist. An dieser Stelle muss sowieso ein schmaler Raum frei bleiben, da der Anker sich gegenüber dem Gehäuse bewegt. Es wäre zwar denkbar, hier eine Gleitlagerung mit einer Berührung vorzusehen. Es ist aber auch möglich und wird von Erfindung vorgeschlagen, hier einen sehr kleinen Ringspalt vorzusehen, der die erwähnten Wirkungen mit sich führt.
Weitere Merkmale, Einzelheiten und Vorzüge der Erfindung ergeben sich aus folgenden Beschreibung einer bevorzugten Ausführungsform, dem Wortlaut der Patentansprüche und der Zusammenfassung, die durch Bezugnahme zum Inhalt der Beschreibung gemacht werden, sowie anhand der Zeichnung. Hierbei zeigt die Figur einen Axialschnitt durch ein Koaxialventil nach der Erfindung.

Das Koaxialventil enthält ein Ventilgehäuse 1, das aus mehreren Teilen zusammengesetzt ist. Am einen Ende ist ein Einlass 2 vorhanden, durch den ein Fluid in das Ventil einströmen kann. Am gegenüberliegenden in der Figur rechten Ende ist ein entsprechender Auslass 3 vorhanden. In dem Ventilgehäuse ist ein Ventilschließkörper 4 angeordnet, der die Form eines zylindrischen Rohrs aufweist. Der Ventilschließkörper liegt mit seiner Vorderkante 5 auf einem Ventilsitz 6 auf. Dies stellt die geschlossene Position des Ventils dar. Aus dieser geschlossenen Position kann der Ventilschließkörper 4 in Richtung seiner eigenen Achse bewegt werden, und zwar in einer solchen Weise, dass sich seine Vorderkante 5 von dem Ventilsitz 6 abhebt. Der Ventilschließkörper 4 ist mit Hilfe mehrerer Dichtungen gegenüber dem Gehäuse abgedichtet.

Wenn der Ventilschließkörper 4 von dem Ventilsitz 6 abgehoben wird, so kann eine durch den Einlass 2 in das Gehäuse 1 einströmende Flüssigkeit durch das Rohr hindurch in Richtung auf den Ventilsitz fließen, von wo aus sie durch einen dann gebildeten Ringspalt zu dem Auslass 3 fließt. In geschlossenem Zustand, der in der Figur dargestellt ist, ist der Strömungsweg unterbrochen.

Zum Betätigen des Ventils dient ein elektromagnetischer Antrieb 7, der eine Spule 8 mit einem Joch 9 aufweist. Das Joch 9 umgibt den Ventilschließkörper 4 mit geringem Abstand. Das Joch 9 erstreckt sich über etwa die Hälfte der axialen Erstreckung der Spule 8 radial nach innen bis zu dem Ventilschließkörper 4. Über den restlichen Teil der Spule 8 springt das Joch 9 nach außen zurück, so dass hier ein zylindrischer Raum gebildet ist, in dem der bewegliche Anker 10 des elektromagnetischen Antriebs 7 angeordnet ist. Dieser Anker 10 ist mit der Außenseite des Ventilschließkörpers 4 verbunden, und zwar bei der dargestellten Ausführungsform dicht. Zwischen einer Schulter 11 des Jochs 9 und einer entsprechenden Schulter 12 des Ankers 10 erstreckt sich eine Druckfeder 13, die den Ventilschließkörper 4 in Schließstellung des Ventils beaufschlagt.

Der Anker 10 weist zwei ringförmige Stirnflächen 14, 15 auf, die an den einander abgewandten Enden des Ankers 10 angeordnet sind. Jeder Stirnfläche 14, 15 gegenüberliegend ist eine weitere Stirnfläche 16, 17 des Gehäuses bzw. des Jochs 9 ausgebildet. Dadurch sind zwei an gegenüberliegenden Seiten des Ankers 10 angeordnete Stirnräume vorhanden, in denen ein Fluid, beispielsweise eine Schmierung, angeordnet sein kann. Wird der Anker 10 durch Betätigen des elektromagnetischen Antriebs 7 von der dargestellten Stellung nach links zur Öffnung des Ventils bewegt, so verringert sich das Volumen des Raumes zwischen den Stirnflächen 14 und 16, während sich der Raum zwischen den Stirnflächen 15 und 17 vergrößert. Die Summe des Volumens beider Räume bleibt gleich. Ein Ausgleich des in diesen Räumen vorhandenen Fluids kann nur zwischen der radialen Außenseite des Ankers 10 und dem diesen umgebenden Teil des Jochs 9 erfolgen. Hier schlägt nun die Erfindung vor, die Außenseite des Ankers 10 auf ein solches Maß zu bringen, dass der Querschnitt dieses Ringspalts eine ganz bestimmte genau definierte Größe aufweist. Die Größe dieses Querschnitts wird so gewählt, dass das Ventil, wenn der Antrieb 7 abgeschaltet wird, sich unter der Wirkung der Feder nur relativ langsam schließt. Dadurch soll ein zu hartes Auftreffen der Vorderkante 5 des Ventilschließkörpers 4 auf den Ventilsitz 6 vermieden werden.

Das dargestellte Ausführungsbeispiel betrifft ein Ventil, das im Normalfall geschlossen ist. Der Schließzustand tritt dann ein, wenn der magnetische Antrieb abgeschaltet wird. Dann drückt die Feder den Ventilschließkörper auf den Ventilsitz. Es gibt auch Ventile, die umgekehrt ausgebildet sind. Bei ihnen öffnet eine Feder das Ventil, während der Antrieb dazu dient, sie zu schließen. Auch bei diesen Ventilen kann die Erfindung Anwendung finden.

## Patentansprüche

1. Koaxialventil, mit
1.1 einem Ventilgehäuse (1),
1.2 einem Ventilsitz (6),
1.3 einem Ventilschließkörper (4) in Form eines Rohrs, der
1.3.1 in axialer Richtung bewegbar angeordnet ist und
1.3.2 mit dem Ventilsitz (6) zusammen wirkt, sowie mit
1.4 einem Magnetantrieb (7), der
1.4.1 einen an der Außenseite des Ventilschließkörpers (4) angebrachten Anker (10) aufweist, wobei
1.5 die Räume in Bewegungsrichtung beidseits des Ankers (10) durch einen Durchgang mit definiertem Querschnitt miteinander verbunden sind.

2. Koaxialventil nach Anspruch 1, bei dem der Querschnitt des Durchgangs so gewählt ist, dass die Schließbewegung des Ventilschließkörpers (4) verlangsamt wird.

3. Koaxialventil nach Anspruch 1 oder 2, bei dem die Schließbewegung des Ventilschließkörpers (4) durch eine Feder (13) bewirkt wird.

4. Koaxialventil nach Anspruch 1 oder 2, bei dem die Schließbewegung des Ventilkörpers (4) durch den Magnetbetrieb (7) bewirkt wird.

5. Koaxialventil nach einem der vorhergehenden Ansprüche, bei dem der Durchgang als Kanal zwischen dem Anker (10) und dem Ventilschließkörper (4) ausgebildet ist.

6. Koaxialventil nach einem der Ansprüche 1 bis 3, bei dem der Durchgang durch das Ventilgehäuse (1) führt.

7. Koaxialventil nach einem der Ansprüche 1 bis 3, bei dem der Durchgang als Ringspalt zwischen der radialen Außenseite des Ankers (10) und dem diesen umgebenden Gehäuse ausgebildet ist.
